# DEMANDE DE BREVET EUROPEEN

(11) **EP 4 015 289 A1**
(43) Date de publication de la demande: **22.06.2022**
(21) Numéro de dépôt: 21214824.1
(22) Date de dépôt: 15.12.2021
(51) Int. Cl.: B60L 53/16, B60L 53/31

(54) **CONNECTEUR POUR BORNE DE RECHARGE MODULAIRE DE VEHICULE ELECTRIQUE**

(30) Priorité: 15.12.2020 FR 2013287
(71) Demandeur: eNexten, 74650 Chavanod (FR)
(72) Inventeur: VANTOURNHOUDT, Thibaut, 74370 Nâves-Parmelan (FR); DEMASSIET, Alexis, 74940 Annecy (FR)
(74) Mandataire: Cabinet Laurent & Charras

(57) **Abrégé**

La présente invention se rapporte à un dispositif de connexion (9) électrique et mécanique de module de recharge (7) de véhicule électrique à une embase fixe (5), comportant :
- une fiche (93) articulée à l'embase (5) autour d'un pivot (91), dont une extrémité libre forme un guide d'insertion en translation,
- un logement (95), disposé à l'arrière du module de recharge (7) , de forme complémentaire à la fiche (93),
- des contacts électriques (97, 99) complémentaires, portés par la fiche (93) au niveau de son extrémité libre, et par le module de recharge (7) au fond du logement (95),
ainsi qu'à la borne de recharge (1) de véhicule automobile comportant ledit dispositif de connexion (9).

## Description

La présente invention se rapporte à un connecteur pour une borne de recharge de batteries de véhicules électriques, notamment de voitures, à structure modulaire. En particulier, l'invention propose un connecteur permettant d'assembler aisément une borne de recharge modulaire, indiquée dans le cadre de parkings ouverts ou semi-ouverts où des voitures se garent côte-à-côte.

Afin de permettre la recharge des batteries de véhicules électriques, de plus en plus d'espaces de parkings sont dotés d'une borne de recharge, à laquelle lesdits véhicules peuvent être raccordés.

Une borne de recharge adapte et délivre du courant issu du réseau domestique à la batterie du véhicule électrique. L'adaptation peut notamment consister en une transformation de la tension et du courant, un redressement, une limitation du courant maximal délivré etc.

Il est coutume d'associer à une place de parking une borne fixe de recharge, de sorte que le véhicule puisse procéder à la recharge pendant qu'il est garé sur la place associée à la borne.

Ces bornes de recharge se présentent généralement sous la forme d'un câble de recharge relié à un module ou armoire contenant les éléments d'adaptation du courant et une éventuelle interface avec l'utilisateur sous forme de voyants ou d'écran.

Les armoires des bornes de recharge sont, de manière connue, soit disposées dans un châssis dépassant du sol, soit intégrées dans un mur, un poteau ou tout autre aménagement.

Les bornes de recharge à châssis au sol occupent une surface au sol non négligeable, surtout dans le cadre de parkings ouverts ou semi-ouverts, où les places de parking sont essentiellement délimitées par des marquages au sol dans un souci d'optimisation de l'utilisation de la surface disponible.

Dans de tels parkings il est notamment impossible de disposer plus qu'une partie minime des armoires requises pour toutes les places dans des murs ou poteaux, qui ne seront que peu voire pas présents à proximité de places marquées. L'utilisation systématique de bornes individuelles avec chacune un châssis ou une embase représente une surface au sol perdue non-négligeable et donc des places de parking sont en conséquence perdues.

En outre, lorsqu'un élément de la borne de recharge est défectueux, un technicien doit se déplacer auprès de l'armoire, trouver l'origine de la panne et y remédier. Le remplacement d'un composant requiert notamment sa commande, livraison et son montage, tandis que la borne de recharge reste indisponible pour la durée de l'intervention.

Afin de remédier aux inconvénients précités, l'invention propose un dispositif de connexion électrique et mécanique de module de recharge de véhicule électrique à une embase fixe, comportant :
- une fiche articulée à l'embase autour d'un pivot, dont une extrémité libre forme un guide d'insertion en translation
- un logement, disposé à l'arrière du module de recharge, de forme complémentaire à la fiche,
- des contacts électriques complémentaires, portés par la fiche au niveau de son extrémité libre, et par le module de recharge au fond du logement.

Le dispositif de connexion ainsi obtenu permet une connexion simple, solide et sécurisée des modules de charge à l'embase. Ils sont ainsi solidement fixés, mais peuvent toujours être retirés et échangés simplement et rapidement, avec peu voire pas d'outils spécifiques.

Les modules qu'accueille l'embase peuvent ainsi être interchangés séparément et indépendamment de l'embase. Les modules peuvent notamment être envoyés par courrier vers un centre d'entretien et réparation, et un module équivalent être envoyé pendant la réparation du premier ou en remplacement.

Le pivot peut notamment être d'axe vertical et le guide d'insertion est tubulaire ou cylindrique.

La fiche peut être de taille supérieure à au moins 25%, préférentiellement 50%, de la taille du module de recharge dans la direction de l'axe de rotation du pivot.

La fiche peut comporter un logement extrémal à son extrémité libre, fermé par un clapet à retour élastique en position fermée, dans lequel sont disposés les contacts électriques de la fiche, et le logement peut comporter un insert portant les contacts électriques du module à son extrémité et enfonçant ledit clapet lors de l'insertion de la fiche dans le logement et connectant électriquement lors de l'insertion le module et l'embase via lesdits contacts électriques de la fiche et du module.

L'invention porte aussi sur une embase de borne de recharge de véhicule électrique comportant :
- un socle configuré pour être posé ou ancré sur le sol,
- une armature comportant une pluralité d'emplacements pour modules fonctionnels dont au moins un module de recharge de véhicule électrique, au moins deux des emplacements étant orientés vers l'extérieur en différentes positions radiales sur le pourtour de l'armature,
caractérisée en ce qu'elle comporte au moins une fiche de dispositif de connexion telle que précédemment décrite, articulée à l'armature au niveau d'un des emplacements.

L'invention porte en outre sur un module de recharge de véhicule pour borne de recharge, comportant :
- un câble de charge avec un raccord au véhicule à recharger ou une prise pour câble de charge de véhicule,
- une forme complémentaire d'un emplacement de l'embase,
caractérisé en ce qu'il comporte un logement de dispositif de connexion tel que précédemment décrit.

L'invention porte en outre sur une borne de recharge de véhicule automobile, caractérisée en ce qu'elle comporte une embase telle que décrite, et une pluralité de modules dont au moins un module de recharge tel que décrit, la fiche du dispositif de connexion portée par l'armature étant insérée dans le logement du module de recharge, de sorte à former une connexion électrique et mécanique.

Les modules peuvent présenter une surface extérieure affleurante avec celle des modules contigus, et cacher l'embase lorsque tous les emplacements accueillent un module.

La borne de recharge peut comporter une pluralité d'emplacements et des éléments interstitiels, disposés entre les modules de sorte à bloquer leur rotation avec la fiche autour du pivot.

Les éléments interstitiels peuvent présenter une surface extérieure affleurante avec celle des modules contigus, et cacher, avec les modules, l'embase lorsque tous les emplacements accueillent un module et tous les éléments interstitiels sont en place.

Les éléments interstitiels peuvent notamment être des profilés métalliques, en particulier en aluminium, configurés pour coulisser en translation pour leur insertion ou extraction.

La borne de recharge peut notamment comporter quatre emplacements orientés à 90° les uns des autres, et quatre éléments interstitiels disposés entre les modules insérés dans les emplacements à l'état assemblée.

La borne peut comporter en outre au moins un module supplémentaire, disposé dans un emplacement, parmi les suivants :
- un module de paiement, comportant un dispositif de paiement pour soumettre la recharge des véhicules à un paiement,
- un module antenne relais, comportant un relais de communication ou une borne sans fil, wi-fi, bluetooth, 4G ou 5G,
- un module de verrouillage de batterie comportant un dispositif combinant verrouillage et recharge de batterie de cycles,
- un module de réception de colis comportant un espace fermé avec une serrure dans laquelle des colis peuvent être déposés et retirés,
- un module de sécurité comportant notamment une caméra de vidéosurveillance et/ou des détecteurs de présence ou de mouvement dirigés vers la position attendue de véhicules lors de la charge,
- un module de capteurs environnementaux ou de pollution comportant notamment des capteurs de pression, température, pollution atmosphérique, ou de pollution sonore,
- un module d'interface comportant un écran d'affichage et/ou des interfaces utilisateur,
- un module d'éclairage comportant un éclairage,
- un module vide composé d'une enceinte aux dimensions d'un emplacement et d'un raccord à l'embase.

Enfin, l'invention se rapporte aussi à une attache murale pour module de recharge tel que décrit, caractérisée en ce qu'elle comporte une fiche articulée autour d'un pivot, portant à une extrémité libre un guide d'insertion en translation et des contacts électriques complémentaires à ceux du module de recharge.

D'autres caractéristiques et avantages de l'invention se dégageront de la description qui va suivre au regard des dessins annexés représentant des modes de réalisation de l'invention qui ne sont donnés qu'à titre d'exemples non limitatifs.
La figure 1 est une vue de dessus d'une borne de recharge pour véhicule selon un mode de réalisation de l'invention dans un parking ouvert.
La figure 2 est une vue en éclaté partiel d'une borne selon un mode de réalisation de l'invention.
La figure 3 est une vue en perspective d'une embase pour une borne selon le mode de réalisation de la figure 2.
La figure 4 est une vue en perspective d'un module fonctionnel pour une borne selon la figure 2.
La figure 5 est une coupe horizontale schématique d'un premier mode de réalisation particulier de borne selon l'invention.
La figure 6 est une coupe horizontale schématique d'un deuxième mode de réalisation particulier de borne selon l'invention.
La figure 7 est une coupe horizontale schématique d'un troisième mode de réalisation particulier de borne selon l'invention.
La figure 8 est une vue de côté d'un modèle de borne pour cycles de type bicyclette.
La figure 9 est une vue en perspective d'un connecteur de module à l'embase à l'état déconnecté.
La figure 10 est une vue en perspective d'un connecteur de module à l'embase à l'état connecté.
La figure 11 illustre en coupe les étapes d'assemblage d'une borne selon un mode de réalisation comportant le dispositif de connexion des figures 9 et 10.
La figure 12 est une vue en coupe de l'extrémité de la fiche du dispositif des figures 9 et 10.
La figure 13 est une représentation schématique en perspective d'une attache murale adaptée à la fixation d'un module des figures précédentes.

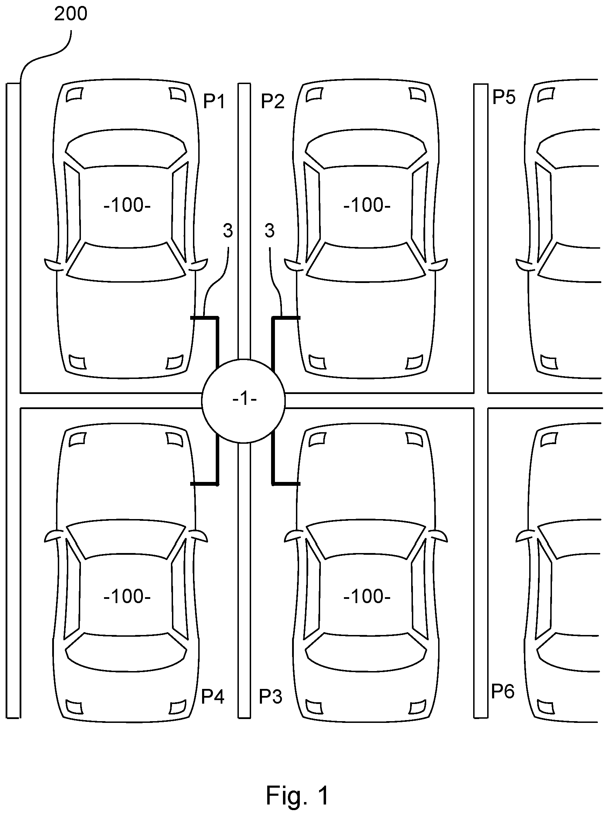

La figure 1 est une vue de dessus d'un garage ou parking dans lequel des véhicules 100 sont garés sur des emplacements de garage P1, P2, ..., P6. Les emplacements de garage P1, P2, ..., P6 sont notamment délimités par un marquage au sol 200.

Les emplacements de garage P1, P2, ..., P6 sont notamment arrangés en lignes contigües, avec deux lignes disposées en contact, de sorte que deux rangées de véhicules 100 puissent se garer en se faisant face deux à deux.

Au croisement de quatre emplacements de garage P1, P2, P3, P4 contigus est disposée une borne de recharge 1. Des véhicules 100 disposés sur les quatre emplacements P1, P2, P3, P4 sont reliés par un câble 3 à la borne de recharge 1 afin de prélever du courant et ainsi recharger leurs batteries. Les véhicules 100 représentés sont des voitures, mais la borne de recharge 1 peut en alternative ou en complément être utilisée pour charger les batteries d'autres types de véhicules tels que des vélos électriques, des scooters électriques, des camionnettes etc.

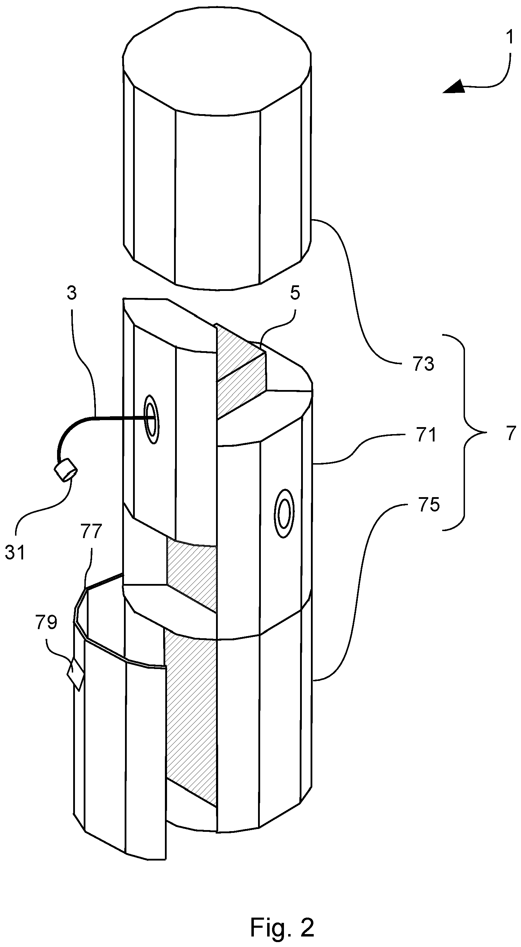

La borne de recharge 1 est représentée en figure 2 en éclaté partiel en perspective.

La borne de recharge 1 comporte notamment une embase 5 et une pluralité de modules fonctionnels 7, dont des modules latéraux 71 venant sur les côtés de l'embase 5, un chapeau 73 au niveau de l'extrémité supérieure de l'embase 5, et des modules inférieurs 75 situés sous les modules latéraux 71.

Les modules fonctionnels 7 comportent notamment des modules de recharge de batteries de véhicule. Ils comportent alors un câble de recharge 3, muni d'un connecteur 31 au véhicule à recharger, ou une prise de courant à laquelle l'utilisateur connecte un câble de recharge attaché à son véhicule.

Une partie des modules fonctionnels 7 peut en alternative comporter un module de paiement, comportant un dispositif de paiement pour soumettre la recharge des véhicules à un paiement. En alternative, au moins un module 7 peut être un module antenne relais, comportant un relais de communication ou une borne sans fil, Wi-Fi, Bluetooth, 4G ou 5G.

Dans une utilisation pour cycles de type bicyclette, au moins un module 7 peut être un module de verrouillage de batterie comportant un dispositif combinant verrouillage et recharge de batterie de cycles, notamment dans une enceinte fermée.

Selon d'autres modes de réalisation, les modules 7 peuvent comporter un module de réception de colis comportant un espace fermé avec une serrure dans laquelle des colis peuvent être déposés et retirés, un module de sécurité comportant notamment une caméra de vidéo-surveillance et/ou des détecteurs de présence ou de mouvement dirigés vers l'emplacement du véhicule 100 lors de la charge, un module de capteurs environnementaux comportant notamment des capteurs de pression, température, pollution atmosphérique, capteurs de pollution sonore, un module d'interface comportant un écran d'affichage, ou encore un module d'éclairage comportant un éclairage.

Des combinaisons des différents modules cités ci-dessus sont bien sûr possibles, soit dans un même module 7 soit sur une même embase 5.

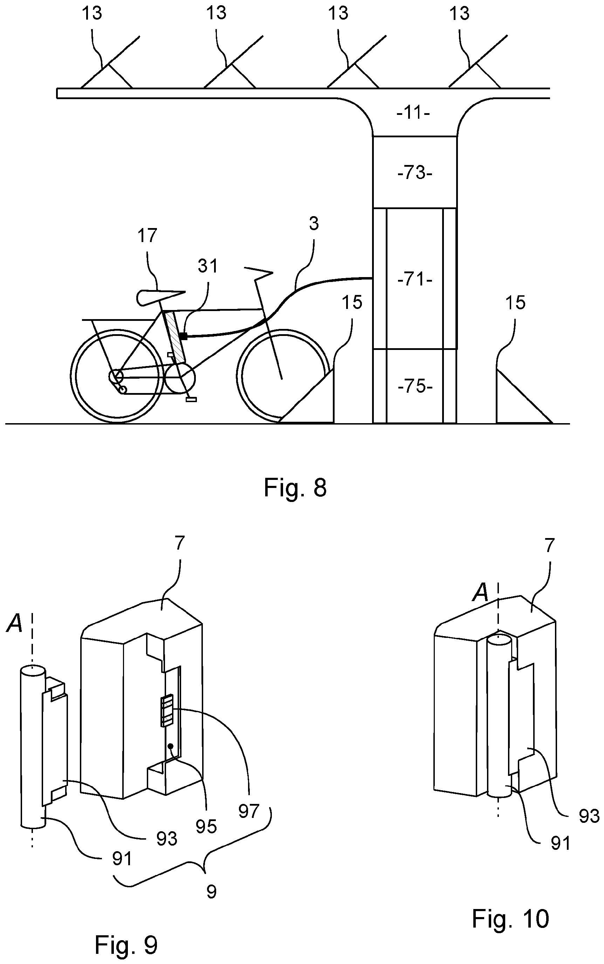

Le chapeau 73 peut notamment être indiqué pour des modules de sécurité, antenne-relais ou des capteurs environnementaux du fait de sa position élevée dans la borne 1. Le chapeau 73 peut en outre comporter une structure de toit (figure 8), la borne 1 fournissant alors un abri en plus de la possibilité de recharge électrique.

En figure 2, les modules inférieurs 75 sont par exemple des modules de stockage, soit pour des bagages des utilisateurs, à la manière d'une consigne, soit pour la réception et le retrait de colis. Ils comportent à cette fin un clapet 77 basculant, qui ferme un espace intérieur du module 7 dans lequel peuvent être entreposés des bagages ou colis.

Le clapet 77 est par exemple actionné par une poignée 79, éventuellement pourvue d'une serrure, ou bien au moyen d'un pavé numérique sur lequel un utilisateur doit taper un code afin d'accéder au contenu du module inférieur 75 en ouvrant le clapet 77.

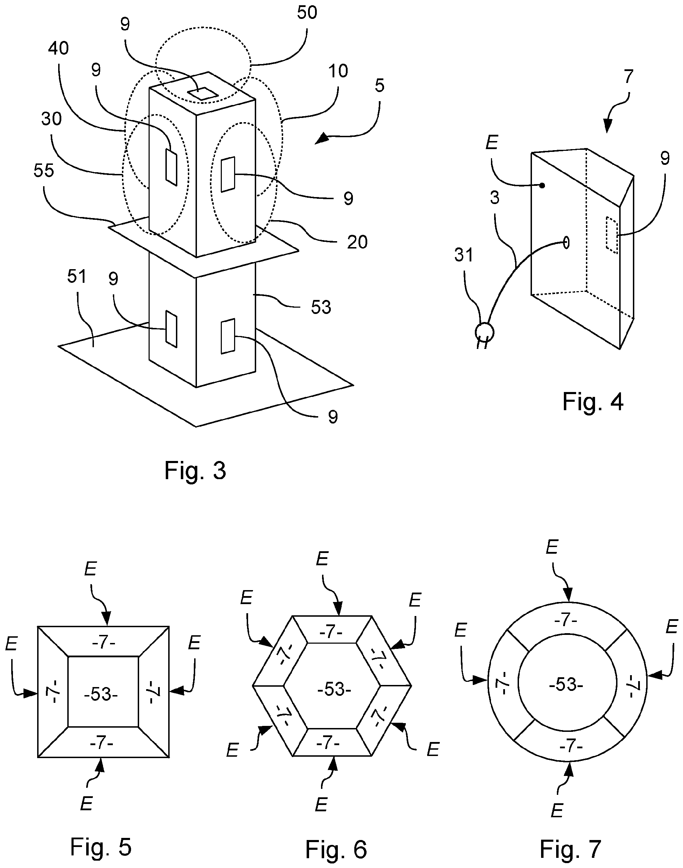

L'embase 5 est séparément représentée en figure 3, un module fonctionnel 7 est séparément représenté en figure 4.

L'embase 5 est reliée à un réseau électrique, qui peut notamment être le réseau de distribution domestique, ou bien un réseau raccordé à un générateur dédié, tel qu'un parc de panneaux photovoltaïques (voir notamment figure 8).

L'embase 5 comporte notamment un socle 51 configuré pour être posé, fixé ou ancré au sol. Le socle 51 peut notamment comporter à son extrémité inférieure une plaque avec des moyens de fixation tels que des perçages pour vis, permettant la fixation ou l'ancrage au sol. Une partie du socle 51 peut en alternative ou en complément être coulée dans du béton pour la fixation de l'embase 5.

A partir du socle 51 s'étend vers le haut une armature 53. L'armature 53 comporte une pluralité d'emplacements 10, 20, 30, 40, 50 démarqués chacun par une partie d'un dispositif de connexion 9 formant attache mécanique et prise de courant pour la connexion et le maintien de modules fonctionnels 7 tels que des modules de recharge de véhicule.

L'armature 53 est cylindrique, ici en particulier parallélépipédique de section carrée.

Les emplacements 10, 20, 30, 40, 50, vides en l'absence de modules fonctionnels 7, sont schématiquement représentés par des ellipses en pointillés uniquement pour une meilleure compréhension, et ces ellipses ne correspondent ni à leur extension totale, ni à la forme des modules 7 qu'ils contiennent lorsqu'installés.

Les dispositifs de connexions 9 peuvent en alternative comporter un connecteur mécanique et un connecteur électrique distincts. Par exemple, la tenue mécanique peut être assurée par des rails guidant l'insertion d'un module 7, notamment jusqu'à ce qu'un dispositif d'encliquetage finisse par bloquer la translation, tandis que la connectique peut être assurée par des prises séparées et par exemple connectées automatiquement lors de la phase finale de l'insertion du module 7 dans l'emplacement correspondant 10, 20, 30, 40, 50 le long des rails.

L'embase 5 présente environ à mi-hauteur de son armature 53 un plateau 55, qui s'étend radialement vers l'extérieur à partir de l'armature 53. Le plateau délimite verticalement les emplacements 10, 20, 30, 40 des modules latéraux 71 et forme un appui pour les modules 7 installés dans lesdits emplacements 10, 20, 30, 40, 50. Sous le plateau 55 est située une deuxième série d'emplacements (non représentés) situés chacun verticalement sous un des emplacements 10, 20, 30, 40 précédemment mentionnés, configurés pour accueillir les modules inférieurs 75. L'embase 5 présente donc des colonnes d'emplacements 10, 20, 30, 40 verticalement alignés avec, dans le mode de réalisation des figures 2 et 3, deux emplacements par colonne. Les colonnes sont radialement réparties autour de l'embase 5, orientées vers l'extérieur en différentes positions radiales sur le pourtour de l'embase 5. Selon la hauteur des modules 7 et de l'embase 5, des colonnes de trois ou plus modules 7 sont possibles pour une borne 1, avec ou sans plateau 55 les délimitant verticalement et formant appui.

Ces colonnes sont orientées dans des directions radiales différentes autour de l'armature 5, de sorte à ce que les modules 7 de chaque colonne soient respectivement accessibles depuis différentes positions radiales autour de l'embase 5.

L'embase 5 comporte en outre un emplacement supérieur 50 pour un module 7 formant chapeau 73, avec une portion de dispositif de connexion 9 sur sa surface supérieure.

Le dispositif de connexion 9 d'une embase 5 et d'un module fonctionnel 7 complémentaire peut notamment comporter respectivement une fiche ou une prise, portés pour l'un par l'embase 5 et pour l'autre par le module 7, d'un système de connexion à fiche et prise complémentaires combinant la fixation du module 7 et sa connexion électrique de sorte que la fixation du module 7 et sa connexion électrique ou la libération et la déconnexion du module 7 sont effectuées conjointement par insertion respectivement extraction de la prise par rapport à la fiche.

Un mode de réalisation particulier de connexion mécanique et électrique est décrit ultérieurement, en lien avec les figures 9 et suivantes.

Un module fonctionnel 7 séparé est représenté en figure 4.

Les modules fonctionnels 7 ont des dimensions et formes complémentaires aux emplacements 10, 20, 30, 40. Une des surfaces extérieures des modules fonctionnels 7 forme la surface extérieure de la borne 1 lorsque le module 7 est inséré dans l'un des emplacements 10, 20, 30, 40.

Les surfaces apparentes des modules latéraux 71, du chapeau 73 et des modules inférieurs 75 sont en particulier affleurantes entre elles, et forment une surface extérieure de la borne 1 sensiblement continue et tubulaire. L'embase 5, lorsque tous les emplacements 10, 20, 30, 40, 50 sont occupés par un module 7, est notamment cachée par lesdits modules 7. Les risques d'arrachement accidentels d'un module 7 sont en conséquence réduits, et l'aspect esthétique de la borne 1 est amélioré.

Il est notamment prévu de placer des modules vides, composés d'une simple enceinte aux dimensions d'un module 7 et de la partie mécanique d'un dispositif de connexion 9, dans les emplacements 10, 20, 30, 40 inutilisés. La surface extérieure continue de la borne 1 est ainsi maintenue, et les dispositifs de connexion 9 de l'embase 5 sont couverts et protégés.

Le module fonctionnel 7 de la figure 4 est à section trapézoïdale, et plus particulièrement en trapèze isocèle, de sorte que lorsque quatre modules 7 de forme identique sont installés autour d'une embase 5 à armature 53 à section carrée, la forme extérieure de la borne 1 est alors parallélépipédique. Cette configuration est représentée en coupe en figure 5.

Le module 7 représenté est un module de recharge électrique, et présente un câble de recharge 3, terminé par un raccord 31 au véhicule à recharger (fiche ou prise).

En alternative, le module 7 peut présenter simplement une prise seule au lieu du câble de recharge 3, l'utilisateur devant alors être en possession d'un câble avec la fiche correspondante.

La surface extérieure E située sur la grande base du trapèze est la surface extérieure, apparente lorsque le module 7 est installé. Ladite surface frontale E est celle portant le câble de recharge 3, ou selon un autre mode de réalisation une prise, afin qu'il soit accessible pour un utilisateur faisant face à la borne 1 pour y connecter son véhicule afin de le recharger.

Sur la surface opposée à la surface extérieure E des moyens de fixation amovibles complémentaires de ceux des emplacements de l'armature 53 de l'embase 5, formant partie du dispositif de connexion 9. Ces moyens de fixation sont par exemple des moyens à coopération de forme, par encliquetage, des guides et rails d'insertion etc.

En particulier, l'insertion des modules 7 peut avoir lieu par coulissement dans des rails portés par l'armature 53 depuis le haut, tandis que le chapeau 73 une fois placé et fixé, par exemple au moyen de vis, empêche leur extraction.

En alternative, les rails et le mouvement de coulissement peuvent être horizontaux, vers l'intérieur de la borne 1.

Le module 7 de recharge comporte en son intérieur les composants utiles à son fonctionnement, notamment : un enrouleur de câble 3 ou une prise en alternative du câble 3, un dispositif d'adaptation et de limitation du courant (redresseur, transformateur, fusibles etc.) pour qu'il convienne à la charge de la batterie du véhicule 100.

Les modules 7 autres que de recharge comportent eux aussi les composants nécessaires à leur fonctionnement, et présentent sur leur surface extérieure E les éléments formant interface avec l'utilisateur : écran, surface tactile, touches, molettes, terminaux de paiement etc. L'alimentation électrique des composants est assurée au moyen du dispositif de connexion 9 à l'embase 5.

La figure 5 est une vue en coupe dans un plan horizontal d'une borne composée de l'embase de la figure 3, et de modules 7 disposés autour de l'embase 5 dans les emplacements 10, 20, 30, 40.

L'embase 5 présente, sur les figures 2, 3 et 5, une armature 53 tubulaire à section carrée, et comporte quatre emplacements 10, 20, 30, 40 disposés à quatre-vingt-dix degrés par rapport au suivant.

D'autres formes sont également possibles, et deux alternatives sont représentées en figures 6 et 7.

En figure 6, la section de l'armature 53 est hexagonale, et les modules 7 sont à section trapézoïdale de sorte que la forme extérieure de la borne 1 est hexagonale. Un plus grand nombre de modules 7 (six) peut alors être installé sur une borne 1.

D'autres sections polygonales pour l'armature 53 permettent d'installer un nombre différent de modules 7 sur une même embase 5. Par exemple, la section peut être en triangle (trois modules 7), pentagone (cinq modules 7), en octogone (huit modules 7).

Les modes de réalisation à section carrée et octogonale sont en particulier indiqués dans le cadre des parkings à emplacements délimités par un marquage au sol. En effet, en étant disposée au coin de quatre emplacements contigus, la borne 1 présente une invariance par rotation de 90° qui la fait apparaître identique pour chacun des emplacements (voir fig. 1).

Avec une section octogonale, quatre modules 7 de recharge correspondant à quatre emplacements P1 à P4 tels qu'en figure 1 peuvent être associés chacun respectivement à un module 7 formant interface et/ou terminal de paiement et de surveillance de l'état de charge.

Le même avantage est constaté pour une borne 1 à section circulaire ayant quatre ou huit emplacements 10, 20, 30, 40, 50 radiaux sur ladite section.

En figure 7, l'armature 53 est tubulaire de section circulaire, et les modules 7 ont une section en forme d'arc de cercle.

Un nombre de modules 7 de recharge supérieur à quatre, notamment six ou huit, est indiqué pour une borne 1 dédiée au rechargement de cycles, en particulier bicyclettes, garés autour de la borne 1 en rayon. Un exemple d'installation comportant une borne 1 ainsi configurée est illustré en figure 8.

En figure 8, la borne 1 comporte un chapeau 73 auquel est rattaché un toit 11. Le toit 11 est par exemple de forme circulaire, ou polygonale identique à celle de la section de la borne 1 (hexagonale, octogonale etc.).

Le toit 11 porte en particulier des panneaux photovoltaïques 13, fournissant du courant à la borne 1, utilisé pour faire fonctionner les modules 7 ou être délivré par lesdits modules 7 pour charger une batterie de véhicule électrique.

Autour de la borne 1, sous le toit 11 sont disposés des emplacements 15, par exemple matérialisés par des étriers dans lesquels un utilisateur insère partiellement une roue de son cycle 17, ou des arceaux auxquels l'utilisateur attache le cadre du cycle 17.

Le cycle 17 est alors chargé au moyen d'un câble 3 et d'un connecteur 31 reliés à un module 7 de recharge.

Les dimensions du toit 11 sont en particulier choisies pour qu'il recouvre les cycles 17 stationnés autour de la borne 1.

La borne 1 ainsi configurée fournit un abri et une possibilité de recharge de cycles 17 de type vélo électrique. Une partie au moins de l'énergie utilisée pour le fonctionnement et la recharge des batteries des cycles 17 peut être issue des panneaux photovoltaïques 13 disposés sur le toit 11.

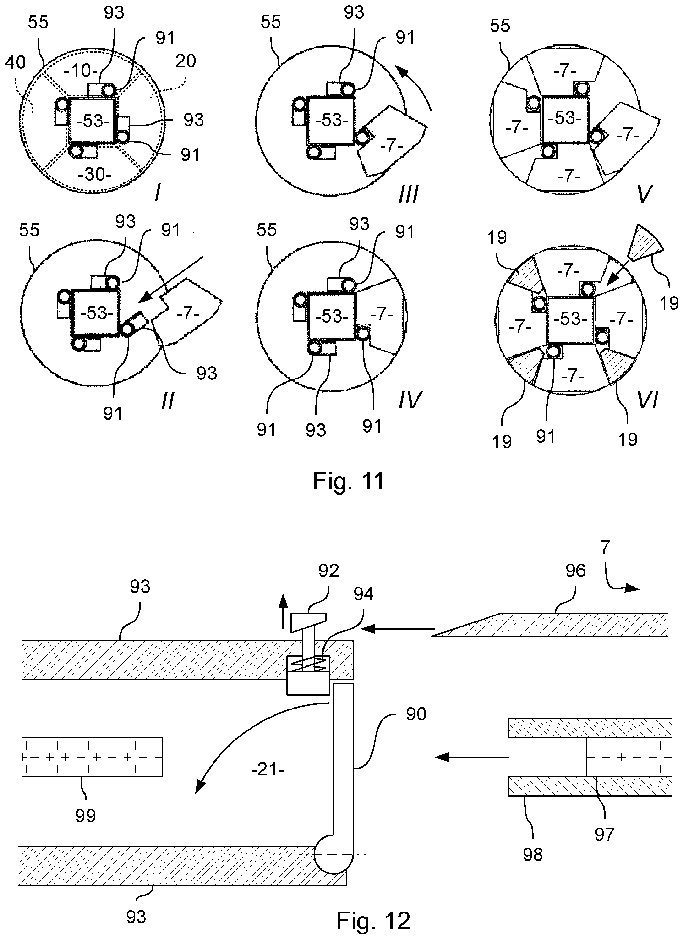

Un mode de réalisation de dispositif de connexion 9 est montré plus en détail en figures 9 et 10, son fonctionnement est illustré en figure 11.

Les figures 9 et 10 sont des vues de trois-quarts de derrière en perspective d'un module 7 en cours de raccordement à l'embase 5 non représentée. L'arrière d'un module 7 est notamment ici le côté opposé à sa surface extérieure E.

Le dispositif de connexion 9 comporte ici un pivot 91, libre en rotation par rapport à un axe A vertical. Une fiche 93 s'étend horizontalement à partir du pivot 91 et est solidaire de celui-ci. La fiche 93 est articulée à l'embase 5 via le pivot 91, et forme au niveau de son extrémité libre un guide d'insertion. La fiche 93 est sensiblement tubulaire, ici de section rectangulaire.

Les contacts électriques de la fiche 93 (voir figure 12) sont disposés à l'intérieur du tube ainsi formé afin d'éviter un contact accidentel avec un utilisateur et ainsi réduire les risques d'électrocution.

Pour la solidité du dispositif de connexion 9, la fiche 93 présente en particulier une hauteur supérieure à 25% de la hauteur totale du module 7, et notamment supérieure à 50% de cette hauteur, et préférentiellement comprise entre 60 et 80% de ladite hauteur.

Le module 7 comporte sur sa face arrière, opposée à la surface extérieure E, un logement 95, de forme et de dimensions correspondant à la fiche 93, s'étendant dans une direction parallèle à la surface arrière. Des contacts électriques 97 sont disposés au fond du logement 95, et s'insèrent dans la fiche 93 lorsqu'elle-même est insérée dans le logement 95.

Les contacts électriques (référence 99 en figure 12) de la fiche 93 et du logement 95 sont complémentaires, et assurent un passage de courant électrique de l'embase 5 au module 7 lorsque la fiche 93 est insérée dans le logement 95.

Le dispositif de connexion 9 peut en outre comporter un dispositif d'encliquetage, qui assure un maintien en translation lorsque la fiche 93 est insérée à fond dans le logement 95, et/ou des moyens de verrouillage, qui sont verrouillés lorsque la fiche 93 est insérée à fond dans le logement 95 et empêchent son retrait en l'absence d'une clé.

Les principales étapes de la mise en place de modules 7 autour d'une embase 5 sont représentées en figure 11. La figure 11 comporte six vues en coupe de dessus de l'armature 53 de l'embase 5 numérotées de I à VI, avec des modules 7 en cours de mise en place des modules 7. Chacune des vues en coupes I à VI correspond à une étape de la mise en place, avec le plateau 55 vu de dessus.

La première vue I correspond à l'embase 5 seule. L'armature 53 de l'embase 5 est ici à section carrée, chacune des faces de ce carré portant un pivot 91 et une fiche 93. Les emplacements 10, 20, 30, 40 des modules 7 sont représentés en pointillés.

La seconde vue II montre un module 7 en plus de l'armature 53. La fiche 93 et le logement 95 (non visible, voir figures 9 et 10) sont en particulier alignés par rotation de la fiche 93, en prévision de l'insertion de la fiche 93 dans le logement 95. Une flèche indique ledit mouvement d'insertion.

La troisième vue III montre le module 7 avec la fiche 93 insérée dans le logement 95. Pour sa mise en place dans l'emplacement 10, 20, 30, 40 correspondant, le module 7 avec la fiche 93 est alors tourné, mouvement indiqué par une flèche, jusqu'à ce que la surface arrière du module 7 soit plaquée contre l'armature 53.

La quatrième vue IV montre le module 7 en place. Pour mettre en place la borne 1, les opérations précédemment décrites en rapport avec les vue I à IV sont répétées pour chacun des modules 7 et dispositifs de connexion 9.

La cinquième vue V montre l'armature 53 avec tous les modules 7 connectés via un dispositif de connexion 9, un dernier module 7 devant être pivoté avec la fiche 93 correspondante. Pour permettre la rotation des modules 7 avec les fiches 93 autour des pivots 91, un volume radial reste libre au niveau de chacun des pivots 91.

La sixième vue VI montre les modules 7 au nombre de quatre installés dans leur emplacement respectif. Des éléments interstitiels 19 sont en outre mis en place dans les volumes radiaux libres entre les modules 7, au niveau des pivots 91, dont un dernier en cours de mise en place (mouvement représenté par une flèche).

Les éléments interstitiels 19 sont représentés massifs sur la sixième vue VI mais peuvent être des profilés creux métalliques, en particulier en aluminium, voire de simples plaques fixées par exemple par des rails aux modules 7 plutôt qu'à l'embase 5.

Les éléments interstitiels 19 sont coulissants en translation pour leur insertion ou extraction.

Les éléments interstitiels 19 bloquent la rotation des modules 7 avec la fiche 93, et donc leur extraction. La surface extérieure des éléments interstitiels est en outre affleurante avec la surface extérieure E des modules 7, et contribue éventuellement à cacher l'embase 5.

Les éléments interstitiels 19 et la surface extérieure E des modules 7 peuvent être réalisés en aluminium et de préférence dans un même matériau et/ou avec une finition identique afin que l'aspect extérieur de la borne 1 soit uniforme.

La figure 12 est une vue en coupe partielle de l'extrémité libre d'une fiche 93 de dispositif de connexion 9 tel que précédemment décrit.

La fiche 93 se termine par un logement extrémal 21, délimité par les parois de la fiche 93. L'extrémité libre de la fiche 93 et donc du logement extrémal 21 est terminée par un clapet 90 à retour élastique en position fermée. Le clapet 90 est notamment muni de moyens élastiques le maintenant en position fermée, dans laquelle il ferme l'extrémité libre de la fiche 93. Le clapet 90 peut notamment être rabattu vers l'intérieur de la fiche 93 dans le logement extrémal 21 par pression vers l'intérieur du logement extrémal 21.

Le logement extrémal 21 renferme notamment les contacts 99 de l'embase 5. La paroi de la fiche 93 et le clapet 90 empêchent donc l'accès direct auxdits contacts 99, afin de minimiser la probabilité d'une électrocution. En effet, les contacts 99 de la fiche 93 sont reliés à l'embase 5 et donc sous tension même en l'absence d'un module 7.

Au niveau de l'extrémité de la fiche 93 se trouve au moins un pion 92 escamotable, à l'opposé de l'axe de basculement du clapet 90. Le pion 92 est escamotable en ce qu'il peut s'escamoter dans un logement dans la paroi de la fiche 93. Le pion 92 traverse la paroi de la fiche 93 et comporte une tête qui se trouve à l'extérieur de la fiche 93. Une traction sur la tête du pion 92 entraîne notamment son escamotage dans le logement extrémal 21.

En alternative, le pion 92 peut porter un aimant ou élément ferromagnétique, ledit aimant ou élément ferromagnétique coopérant avec un élément ferromagnétique ou aimant complémentaire disposé dans le logement 95 du module 7, de sorte à causer son escamotage lors de l'insertion. Le pion 92 peut alors ne pas dépasser de la paroi de la fiche 93.

Des moyens élastiques 94 maintiennent ledit pion 92 dans une position de blocage où il bloque le clapet 90 dans la position fermée. Ces moyens élastiques 94 sont par exemple un ressort hélicoïdal, maintenant le pion 92 hors du logement en plaquant la tête du pion 92 contre la paroi de la fiche 93.

Le module 7 est représenté par ses contacts 97, qui sont portés par un insert 98 en forme de tige ou plaque, qui vient rabattre le clapet 90 lors de l'insertion de la fiche 93 dans le logement 95 puis mettre en contact électrique les contacts 97 du module 7 avec les contacts 99 de la fiche 93.

Le module 7 comporte en outre une lame 96, située au niveau du logement 95. En particulier la lame 96 peut être une paroi du logement 95. La lame 96 est profilée et positionnée de sorte à s'insérer entre la tête du pion 92 et la paroi extérieure de la fiche 93. La tête du pion 92, c'est-à-dire la partie dépassant de la fiche 93, est notamment pourvue d'une rampe, et la lame 96 est biseautée. En conséquence, l'insertion de la lame 96 sous la tête du pion 92 vient soulever ledit pion 92, et escamoter la partie bloquant le clapet 90.

En soulevant le pion 92, la lame 96 libère donc le clapet 90, de sorte que l'insert 98 portant les contacts électriques 97 du module 7 peut ensuite librement enfoncer le clapet 90 pour s'insérer dans le logement extrémal 21 et ainsi fermer le circuit d'alimentation du module 7 en rencontrant les contacts 99 de la fiche 93.

Le mouvement d'insertion de la fiche 93 dans le logement 95 du module 7 en débloquant le clapet 90 par escamotage du pion 92, ouvre le logement extrémal 21 par pression de l'insert 98 portant les contacts 97 du module 7 et vient connecter électriquement le module 7 à l'embase en un seul mouvement rectiligne, tandis qu'en dehors du logement 95 le clapet 90 est fermé et bloqué par le pion 92. Les contacts 99 de la fiche 93 de l'embase sont ainsi protégés, tandis que l'insertion ne nécessite pas d'étape de déverrouillage, et reste ainsi simple et naturelle.

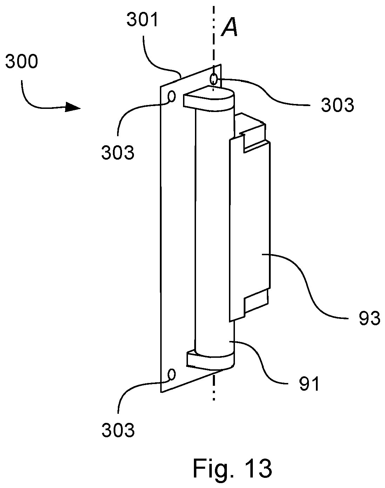

La fiche 93, articulée à un pivot 91 peut en outre être disposée sur une attache murale 300 pour module 7 via ledit pivot 91. Une telle attache murale 300 est représentée en figure 13.

L'attache murale 300 peut se présenter sous forme d'une plaque 201 à fixer sur un mur avec un raccord à un réseau électrique, avec le pivot 91 attaché à la plaque 301 et libre en rotation par rapport à celle-ci. La fiche 93 est alors rattachée au pivot 91 comme expliqué plus haut.

La plaque 301 est notamment munie de moyens d'attache 303 au mur, ici sous forme de préperçages pour des vis. L'attache murale 300 permet l'accrochage d'un module 7 séparément à un mur, sans embase 5.

La borne 1 selon l'invention présente une structure modulaire : des modules 7 aux fonctions variées peuvent être implémentés sur l'embase 5 en plus des modules 7 de recharge. En dimensionnant les modules 7 de sorte que leurs surfaces extérieures E soient affleurantes entre elles et/ou avec des éléments interstitiels 19, un aspect extérieur esthétique et uni peut être obtenu. Les protubérances éventuelles au niveau des interstices entre les modules 7 ou entre les modules 7 et l'embase 5, qui représentent des prises de force pour un arrachement des modules 7, peuvent ainsi être limitées voire supprimées.

En outre, le changement d'un module 7, notamment au moyen du dispositif de connexion 9 décrit, est simplifié. En particulier, un module 7 défectueux peut être envoyé à un atelier de réparation tandis qu'un module 7 de remplacement est envoyé au propriétaire de la borne 1. Le temps durant lequel un module 7 est défectueux ou indisponible peut ainsi être réduit.

Les propriétaires des bornes 1 peuvent en outre les aménager à leur convenance, en remplaçant un ou plusieurs modules 7 de recharge par d'autres types de modules 7, afin de fournir d'autres services que la recharge seule.

## Revendications

1. Dispositif de connexion (9) électrique et mécanique de module de recharge (7) de véhicule électrique à une embase fixe (5), comportant :
- une fiche (93) articulée à l'embase (5) autour d'un pivot (91), dont une extrémité libre forme un guide d'insertion en translation,
- un logement (95), disposé à l'arrière du module de recharge (7), de forme complémentaire à la fiche (93),
- des contacts électriques (97, 99) complémentaires, portés par la fiche (93) au niveau de son extrémité libre, et par le module de recharge (7) au fond du logement (95).

2. Dispositif de connexion (9) selon la revendication 1, **caractérisée en ce que** le pivot (91) est d'axe (A) vertical et le guide d'insertion est tubulaire ou cylindrique.

3. Dispositif de connexion (9) selon la revendication 1 ou 2, **caractérisé en ce que** la fiche (93) est de taille supérieure à au moins 25%, préférentiellement 50%, de la taille du module de recharge (7) dans la direction de l'axe (A) de rotation du pivot.

4. Dispositif de connexion selon l'une des revendications précédentes, **caractérisée en ce que** la fiche (93) comporte un logement extrémal (21) à son extrémité libre, fermé par un clapet (90) à retour élastique en position fermée, dans lequel sont disposés les contacts électriques (99) de la fiche (93), et le logement (95) comporte un insert portant les contacts électriques (97) du module (7) à son extrémité et enfonçant ledit clapet (90) lors de l'insertion de la fiche (93) dans le logement (95) et connectant électriquement lors de l'insertion le module (7) et l'embase (5) via lesdits contacts électriques (97, 99) de la fiche (93) et du module (7).

5. Embase (5) de borne (1) de recharge de véhicule électrique comportant :
- un socle (51) configuré pour être posé ou ancré sur le sol,
- une armature (53) comportant une pluralité d'emplacements (10, 20, 30, 40, 50) pour modules fonctionnels (7) dont au moins un module (7) de recharge de véhicule électrique, au moins deux des emplacements (10, 20, 30, 40, 50) étant orientés vers l'extérieur en différentes positions radiales sur le pourtour de l'armature (53),
**caractérisée en ce qu'**elle comporte au moins une fiche (93) de dispositif de connexion (9) selon l'une des revendications précédentes, articulée à l'armature (53) au niveau d'un des emplacements (10, 20, 30, 40, 50).

6. Module (7) de recharge de véhicule pour borne de recharge (1), comportant :
- un câble de charge (3) avec un raccord (31) au véhicule à recharger ou une prise pour câble de charge de véhicule,
- une forme complémentaire d'un emplacement (10, 20, 30, 40, 50) d'une embase (5) selon la revendication précédente,
**caractérisé en ce qu'**il comporte un logement (95) de dispositif de connexion (9) selon l'une des revendications 1 à 3.

7. Borne (1) de recharge de véhicule automobile, **caractérisée en ce qu'**elle comporte une embase (5) selon la revendication 5, et une pluralité de modules (7) dont au moins un module (7) de recharge selon la revendication 6, la fiche (93) du dispositif de connexion (9) portée par l'armature (53) étant insérée dans le logement (95) du module de recharge (7), de sorte à former une connexion électrique et mécanique.

8. Borne (1) de recharge selon la revendication précédente, **caractérisée en ce que** les modules (7) présentent une surface extérieure (E) affleurante avec celle des modules (7) contigus, et cachent l'embase (5) lorsque tous les emplacements (10, 20, 30, 40, 50) accueillent un module (7).

9. Borne (1) de recharge selon la revendication précédente, **caractérisée en ce qu'**elle comporte une pluralité d'emplacements (10, 20, 30, 40, 50), et des éléments interstitiels (19), disposés entre les modules (7) de sorte à bloquer leur rotation avec la fiche (93) autour du pivot (91).

10. Borne (1) de recharge selon la revendication précédente, **caractérisée en ce que** les éléments interstitiels (19) présentent une surface extérieure (E) affleurante avec celle des modules (7) contigus, et cachent, avec les modules (7), l'embase (5) lorsque tous les emplacements (10, 20, 30, 40, 50) accueillent un module (7) et tous les éléments interstitiels (19) sont en place.

11. Borne (1) de recharge selon l'une des revendications 9 ou 10, **caractérisée en ce que** les éléments interstitiels (19) sont des profilés métalliques, en particulier en aluminium, configurés pour coulisser en translation pour leur insertion ou extraction.

12. Borne (1) de recharge selon la revendication précédente, **caractérisée en ce qu'**elle comporte quatre emplacements (10, 20, 30, 40) orientés à 90° les uns des autres, et quatre éléments interstitiels (19) disposés entre les modules insérés dans les emplacements à l'état assemblée.

13. Borne (1) de recharge selon l'une des revendications 7 à 12, **caractérisée en ce qu'**elle comporte en outre au moins un module (7) supplémentaire, disposé dans un emplacement (10, 20, 30, 40, 50), parmi les suivants :
- un module de paiement, comportant un dispositif de paiement pour soumettre la recharge des véhicules à un paiement,
- un module antenne relais, comportant un relais de communication ou une borne sans fil, wi-fi, bluetooth, 4G ou 5G,
- un module de verrouillage de batterie comportant un dispositif combinant verrouillage et recharge de batteries de cycles,
- un module de réception de colis comportant un espace fermé avec une serrure dans laquelle des colis peuvent être déposés et retirés,
- un module de sécurité comportant notamment une caméra de vidéosurveillance et/ou des détecteurs de présence ou de mouvement dirigés vers la position attendue de véhicules lors de la charge,
- un module de capteurs environnementaux ou de pollution comportant notamment des capteurs de pression, température, pollution atmosphérique, ou de pollution sonore,
- un module d'interface comportant un écran d'affichage et/ou des interfaces utilisateur,
- un module d'éclairage comportant un éclairage,
- un module vide composé d'une enceinte aux dimensions d'un emplacement (10, 20, 30, 40, 50) et d'un raccord à l'embase (9).

14. Attache murale (300) pour module (7) de recharge selon la revendication 6, **caractérisée en ce qu'**elle comporte une fiche (93) articulée autour d'un pivot (91), portant à une extrémité libre un guide d'insertion en translation et des contacts électriques (99) complémentaires à ceux du module (7) de recharge.
